# EUROPÄISCHE PATENTSCHRIFT

(11) **EP 0 942 841 B1**
(45) Veröffentlichungstag und Bekanntmachung des Hinweises auf die Patenterteilung: **08.11.2000**
(21) Anmeldenummer: 97952880.9
(22) Anmeldetag: 04.12.1997
(51) Int. Cl.: B60J 10/00, B60S 1/38

(54) **BEHEIZBARER GUMMIKÖRPER**
HEATABLE RUBBER BODY
CORPS EN CAOUTCHOUC SUSCEPTIBLE D'ETRE CHAUFFE

(30) Priorität: 12.12.1996 DE 19651733
(43) Veröffentlichungstag der Anmeldung: 22.09.1999
(73) Patentinhaber: METZELER Automotive Profiles GmbH, D-88131 Lindau (DE)
(72) Erfinder: GLAGOW, Klaus, D-88142 Wasserburg (DE); DEHNERT, Klaus, D-88138 Hergensweiler (DE); SOLF, Bernd, D-88069 Tettnang (DE)
(74) Vertreter: Preissner, Nicolaus, Dipl.-Ing.
(86) Internationale Anmeldenummer: EP9706787
(87) Internationale Veröffentlichungsnummer: WO9825780

(56) Entgegenhaltungen:
- EP-A- 0 516 526
- EP-A- 0 521 825
- EP-A- 0 540 183
- EP-A- 0 638 701
- EP-A- 0 712 747
- WO-A-88/09594
- DE-A- 1 430 621
- DE-A- 3 500 436
- US-A- 3 948 811
- US-A- 4 061 601

## Beschreibung

Die vorliegende Erfindung betrifft einen beheizbaren Gummikörper, insbesondere Dichtungsprofil oder Gummischlauch, wobei der Gummikörper aus einem gummielastischen Material extrudiert ist und ein elektrisches Heizmittel aufweist, das mit einer geeigneten Spannungsquelle verbindbar ist.

Beheizbare Gummikörper der genannten Art sind bereits bekannt. Die US-A-3 948 811 betrifft ein elektrisch leitfähiges Produkt, das ein Trägermaterial oder ein Gitternetz umfaßt, das mit einem elektrisch leitfähigen und thermisch stabilen Material beschichtet oder imprägniert ist. Gemäß den in den Figuren 3 und 4 dieser Druckschrift dargestellten Ausführungsbeispielen wird dieses elektrisch leitfähige Produkt auf ein Gummielement, nämlich ein Wischblatt, aufgebracht. Das Wischblatt und das elektrisch leitfähige Produkt werden getrennt voneinander hergestellt und erst nachfolgend auf geeignete Weise, insbesondere durch Klebstoff verbunden. Nachteilig hierbei ist, daß sich das elektrisch leitfähige Produkt, das als Widerstandsbereich dient, von dem Gummielement lösen kann. Hierdurch wird die Heizleistung verringert. Weiter können durch die Loslösung Risse in dem Gummikörper auftreten, wodurch dessen Eigenschaften beeinträchtigt werden.

In der EP-A-0 516 526 ist eine als beheizbarer Gummikörper ausgebildete Dichtungseinrichtung für ein sich öffnendes Element eines Kraftfahrzeugs beschrieben. Die Dichtungseinrichtung weist ein rohrförmiges weiches Dichtungsteil auf, in dessen Masse ein biegsamer, elektrischer Widerstand eingebettet ist. Der Widerstand besteht aus einem Draht, der helixförmig ausgebildet ist. Bei Anlegung einer Spannung erwärmt sich der Draht und damit auch das den Draht umgebende weiche Dichtungsteil.

Derartige bekannte beheizbare Gummikörper weisen jedoch eine Reihe von Nachteilen auf. So ist die Herstellung des Gummikörpers relativ aufwendig und damit kostenintensiv, da in mehreren Herstellungsschritten zunächst der helixförmige Widerstandsdraht geformt werden, und anschließend die weiche Dichtungsmasse um den Widerstandsdraht herum extrudiert werden muß. Weiterhin kann bei einem derart hergestellten Gummikörper das Problem auftreten, daß sich der Widerstandsdraht während des Gebrauchs der Dichtungseinrichtung von dem Dichtungsteil ablöst. Dadurch kann die in dem Widerstandsdraht erzeugte Wärme nur noch unzureichend auf das Dichtungsteil übertragen werden. Dies führt zu einer Verringerung der Heizleistung der Dichtungseinrichtung. Zum Ausgleich des Leistungsdefizits müßte in diesem Fall der Widerstandsdraht über das notwendige Maß hinaus erhitzt werden. Dies kann jedoch zu Schädigungen der Dichtung, beispielsweise durch Verschmorungen, führen. Schließlich können durch die Loslösung des Widerstandsdrahts von dem Dichtungsteil Risse im Dichtungsteil auftreten, wodurch die Dichtungswirkung der Dichtungseinrichtung beeinträchtigt wird.

Ausgehend vom genannten Stand der Technik liegt der vorliegenden Erfindung die Aufgabe zugrunde, einen beheizbaren Gummikörper der genannten Art derart weiterzubilden, daß die genannten Nachteile vermieden werden. Insbesondere soll ein beheizbarer Gummikörper geschaffen werden, der auf einfache Weise kostengünstig herstellbar ist, und mit dem eine problemlose Heiz- und Dichtwirkung sichergestellt werden kann.

Die Aufgabe wird erfindungsgemäß dadurch gelöst, daß das elektrische Heizmittel mindestens einen in dem Gummikörper koextrudierten Widerstandsbereich aufweist, der durch Zugabe eines leitfähigen Stoffs zu dem gummielastischen Material als elektrischer Widerstand ausgebildet ist. Durch die Zugabe eines leitfähigen Stoffs zu dem gummielastischen Material wird zunächst die Verwendung eines separaten Widerstandsdrahts überflüssig gemacht. Damit entfallen alle die vorstehend genannten Probleme, die durch das Ablösen des Drahts von dem Gummikörper auftreten können. Weiterhin wird die Herstellung des beheizbaren Gummikörpers stark vereinfacht, da die leitfähigen Stoffe mit dem Gummikörper koextrudiert werden. Eine aufwendige separate Halterung und Justierung eines Widerstandsdrahts vor der Extrusion des Gummikörpers kann somit entfallen. Durch Beaufschlagung des den leitfähigen Stoff aufweisenden koextrudierten Widerstandsbereichs des Gummikörpers mit elektrischem Strom erwärmt sich dieser. Diese Wärme kann auf mit dem Gummikörper in Verbindung stehende Teile, beispielsweise Karosserieteile eines Kraftfahrzeugs, übertragen werden. Damit kann beispielsweise ein Anfrieren der Teile an dem Gummikörper verhindert werden.

Gemäß einer bevorzugten Ausführungsform der Erfindung ist der als elektrischer Widerstand ausgebildete Widerstandsbereich an der Oberfläche des Gummikörpers ausgebildet.

Der leitfähige Stoff ist vorzugsweise ein Metall und/oder Graphit und/oder Ruß und/oder ein koextrudierter leitfähiger Kunststoff. Allerdings ist die Verwendung des leitfähigen Stoffs nicht auf die vorstehend genannten Beispiele beschränkt. Vielmehr ist jede Art von Stoffen denkbar, die geeignet sind, elektrischen Strom zu leiten.

Zu Herstellung des erfindungsgemäßen beheizbaren Gummikörpers wird der leitfähige Stoff beispielsweise in Pulver- oder Granulatform zunächst mit einer Gummirohmasse vermischt. Dabei ist die Menge des verwendeten leitfähigen Stoffs variabel und kann entsprechend den gewünschten Anforderungen gezielt eingestellt werden. Soll beispielsweise ein großer Bereich des Gummikörpers beheizt werden, oder soll beispielsweise auf Grund niedriger Temperaturen eine große Heizleistung zur Verfügung gestellt werden, empfiehlt sich die Verwendung einer großen Menge an leitfähigen Stoffen.

Die auf diese Weise hergestellte Mischung aus Gummimasse und leitfähigen Stoffen wird während der Extrusion des Gummikörpers mit diesem koextrudiert. Dabei ist von Bedeutung, daß durch diese Art der Herstellung ein leitfähiger und damit beheizbarer Bereich an jeder beliebigen Stelle des Gummikörpers ausgebildet werden kann. Damit wird eine gezielte und, falls erwünscht, auch nur lokale Beheizung des Gummikörpers möglich. Zur Erzeugung eines Stromflusses in dem Widerstandsbereich sind herkömmliche Anschlußelemente zur Verbindung des Widerstandsbereichs mit einer geeigneten Spannungsquelle erforderlich. Solche Anschlußelemente können beispielsweise Stecker und dergleichen sein.

Nach einer Weiterbildung der Erfindung kann der in den Ausführungsvarianten beschriebene beheizbare Gummikörper aus EPDM gebildet sein. Dieses Material ist jedoch rein exemplarischer Natur, so das selbstverständlich auch andere Materialien verwendet werden können.

Vorteilhaft ist der als elektrischer Widerstand ausgebildete koextrudierte Bereich des Gummikörpers mit mindestens einer Isolierschicht beschichtet. Dadurch wird verhindert, daß ein Benutzer mit den stromführenden Teilen des Gummikörpers direkt in Berührung kommen kann. Ferner kann die Isolierschicht als Schutzschicht dienen, um Beschädigungen wie Korrosion und dergleichen des als Widerstand ausgebildeten Bereichs zu verhindern. Dabei kann die Isolierschicht beispielsweise ein nicht leitender Lack und/oder Kunststoff sein.

Gemäß einer bevorzugten Ausführungsform der Erfindung ist das Heizmittel zu seiner Betätigung mit einem Auslöseelement gekoppelt. Ein solches Auslöseelement stellt beispielsweise eine Logik für Ein- und Ausschaltungen dar. Als Beispiele für solche Auslöseelemente sind Zeitgeber und/oder Außentemperaturgeber und/oder Betätigungsschalter und/oder Zentralverriegelungen für Kraftfahrzeuge und/oder Zündungen eines Kraftfahrzeugs zu nennen. Diese Aufzählung ist jedoch rein exemplarischer Natur und nicht abschließend zu verstehen.

Die Verwendung des erfindungsgemäßen Auslöseelements weist einige Vorteile auf. Wenn das Heizelement des beheizbaren Gummikörpers beispielsweise mit einem Außentemperaturgeber gekoppelt ist, kann die Betätigung des Heizelements automatisch bei Unterschreiten einer vorbestimmten Temperatur erfolgen. Die Kopplung des Heizelements mit der Zentralverriegelung eines Kraftfahrzeugs hat beispielsweise den Vorteil, daß die Heizeinrichtung bei Betätigung der Zentralverriegelung aktiviert wird. Dies ist insbesondere in den weiter unten beschriebenen Beispielen von Bedeutung.

Der beheizbare Gummikörper gemäß der vorliegenden Erfindung kann in den unterschiedlichsten Varianten und Formen eingesetzt werden. Einige vorteilhafte Anwendungsgebiete werden nachfolgend beschrieben.

Nach einer Weiterbildung der Erfindung kann der beheizbare Gummikörper eine Deckeldichtung, vorzugsweise eine Heckdeckel- und/oder Frontdeckeldichtung für ein Kraftfahrzeug sein. Es ist aber auch denkbar, den beheizbaren Gummikörper als Schiebedachdichtung, Türdichtung und/oder Türummantelung zu verwenden. Darüber hinaus ist auch eine Verwendung als Fensterführung denkbar. In einem technisch anderen Anwendungsgebiet kann der beheizbare Gummikörper ein Flüssigkeitsschlauch, vorzugsweise ein Wasserschlauch sein. Weiterhin ist es denkbar, den erfindungsgemäßen beheizbaren Gummikörper als Wischerblatt eines Scheibenwischers zu verwenden. Die Aufzählung der vorstehend genannten Beispiele ist wiederum rein exemplarischer Natur und nicht abschließend zu verstehen. Vielmehr kann der erfindungsgemäße beheizbare Gummikörper überall dort zum Einsatz kommen, wo ein Einfrieren von Flüssigkeiten oder ein Anfrieren von Gegenständen verhindert werden soll.

Zwei Anwendungsmöglichkeiten der vorstehend beschriebenen erfindungsgemäßen beheizbaren Gummikörper werden zur Verdeutlichung der allgemeinen Funktionsweise nachfolgend beschrieben. Bei Einsatz in kaltem Klima geschieht es häufig, daß die Türscheiben in den Fensterführungen eines Kraftfahrzeugs festgefroren sind und im kalten Fahrzeug zunächst nicht abgesenkt werden können. In einem solchen Fall ist beispielsweise ein als Fensterführungsprofil ausgebildeter beheizbarer Gummikörper denkbar. Das Heizelement des Gummikörpers ist beispielsweise mit der Zentralverriegelung des Kraftfahrzeugs gekoppelt. Beim Entriegeln der Türen wird das Heizelement elektrisch angesteuert und für eine bestimmte Zeit unter Strom gesetzt. Damit wärmt sich der als elektrischer Widerstand ausgebildete Bereich des Gummikörpers, beispielsweise eine Dichtlippe des Fensterführungsprofils, auf und taut die Türfensterscheibe vom Fensterführungsprofil los. Somit ist ein einwandfreies Öffnen der Türscheibe möglich, ohne daß es zu Beschädigungen des Fensterführungsprofils kommt. Ein anderes gängiges Problem bei Kraftfahrzeugen ist beispielsweise das Einfrieren von Flüssigkeiten in oder an dem Fahrzeug. Auch dieses Problem kann mittels der erfindungsgemäßen beheizbaren Gummikörper gelöst werden. In diesem Fall ist der beheizbare Gummikörper beispielsweise als Wasserschlauch ausgebildet. Bei Anlegen eines elektrischen Stroms an die als elektrischer Widerstand ausgebildeten Bereiche des Gummikörpers werden sich diese erwärmen und beispielsweise im Fall von Scheibenwischerschläuchen oder Scheibenwischerblättern die gefrorene Flüssigkeit in ihrer Nähe oder den Inhalt soweit erwärmen, daß ein Einfrieren ausgeschlossen ist.

Die Erfindung wird nachfolgend anhand von Ausführungsbeispielen näher beschrieben, die in schematischer Weise in der Zeichnung dargestellt sind. Es zeigen:
- Figur 1: eine Querschnittsansicht eines als Heckdeckeldichtung ausgebildeten erfindungsgemäßen beheizbaren Gummikörpers;
- Figur 2: eine Querschnittsansicht eines als Türdichtung ausgebildeten erfindungsgemäßen beheizbaren Gummikörpers;
- Figur 3: eine Querschnittsansicht eines als Fensterführungsprofil ausgebildeten erfindungsgemäßen beheizbaren Gummikörpers;
- Figur 4: eine Querschnittsansicht eines anderen Ausführungsbeispiels des als Fensterführungsprofil ausgebildeten erfindungsgemäßen beheizbaren Gummikörpers;
- Figur 5: eine perspektivische Teilansicht eines als Flüssigkeitsschlauch ausgebildeten erfindungsgemäßen beheizbaren Gummikörpers;
- Figur 6: eine Querschnittsansicht eines als Schiebedachdichtung ausgebildeten beheizbaren Gummikörpers gemäß der vorliegenden Erfindung; und
- Figur 7: eine Querschnittsansicht einer Wischerblattanordnung, in der der erfindungsgemäße beheizbare Gummikörper als Wischerblatt ausgebildet ist.

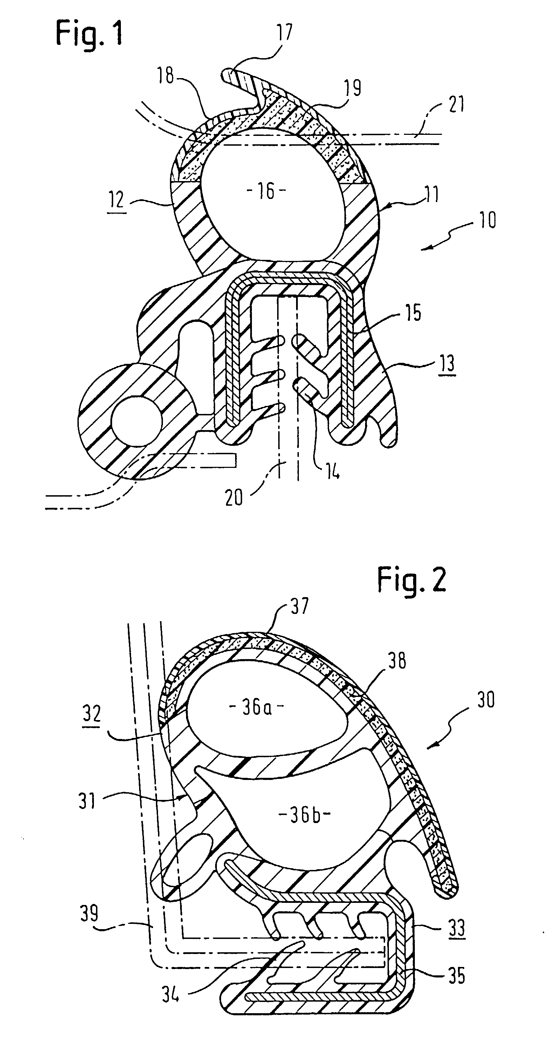

Figur 1 zeigt ein erstes Ausführungsbeispiel gemäß der vorliegenden Erfindung. Darin ist der beheizbare Gummikörper als Heckdeckeldichtung 10 ausgebildet. Die Heckdeckeldichtung 10 besteht aus einem Dichtungsprofil 11, das wiederum aus einer Hohlkammerdichtung 12 und einem Befestigungsbereich 13 aufgebaut ist. Der Befestigungsbereich 13 dient zur Befestigung der Heckdeckeldichtung 10 an einem Karosserieflansch 20. Die Befestigung erfolgt über Haltelippen 14 und eine Verstärkungseinlage 15. Die Verstärkungseinlage 15 weist einen im wesentlichen U-förmigen Querschnitt auf und ist vorzugsweise aus Metall hergestellt. Die Verstärkungseinlage 15 hat die Aufgabe, den Befestigungsbereich 13 in der vorgegebenen Form zu halten. Die mit dem Befestigungsbereich 13 stoffschlüssig verbundene Hohlkammerdichtung 12 weist eine Hohlkammer 16 auf.

In dem Bereich der Hohlkammerdichtung 12, der dem Heckdeckel 21 zugewandt ist, weist die Heckdeckeldichtung 10 ein Heizmittel auf, das mit einer geeigneten Spannungsquelle (nicht dargestellt) verbindbar ist. Das Heizmittel besteht aus einem in der Hohlkammerdichtung 12 koextrudierten Widerstandsbereich 19. Der Widerstandbereich 19 besteht grundsätzlich aus einer Gummimischung, in der leitfähige Stoffe in der vorbeschriebenen Art und Weise eingebracht worden sind. Der Widerstandsbereich 19 ist über nicht dargestellte Anschlüsse mit einer geeigneten Spannungsquelle verbunden. Um zu vermeiden, daß ein Benutzer mit dem stromführenden Widerstandsbereich 19 direkt in Kontakt kommen kann, und um zu vermeiden, daß der Widerstandsbereich 19 durch äußere Einflüsse beschädigt werden kann, ist die Heckdeckeldichtung 10 im Widerstandsbereich 19 mit einer isolierenden Außenschicht 18 beschichtet. Zur Verbesserung der Dichtungseigenschaften weist die Heckdeckeldichtung 10 in ihrem oberen Endbereich zusätzlich eine kammförmige Dichtungslippe 17 auf.

Wenn beispielsweise auf Grund niedriger Temperaturen der Heckdeckel 21 an der Heckdeckeldichtung 10 angefroren ist, kann das Heizmittel, das zu seiner Betätigung mit einem Auslöseelement gekoppelt ist, betätigt werden. Beispielsweise kann das Auslöseelement in Form einer Zentralverriegelung für ein Kraftfahrzeug vorgesehen sein. Beim Öffnen der Zentralverriegelung wird durch den Widerstandsbereich 19 Strom geleitet. Dabei erfolgt die Stromleitung über die im Widerstandsbereich 19 befindlichen leitfähigen Stoffe. Der Stromfluß bewirkt, daß sich die leitfähigen Stoffe und damit der gesamte Widerstandsbereich 19 erwärmen. Durch diese Erwärmung wird der Heckdeckel 21 von der Heckdeckeldichtung 10 losgetaut. Somit kann der Heckdeckel 21 von der Heckdeckeldichtung 10 gelöst werden, ohne daß diese beschädigt wird.

Figur 2 zeigt ein weiteres Ausführungsbeispiel der vorliegenden Erfindung. Darin ist der beheizbare Gummikörper als Türdichtung 30 ausgebildet. Der grundsätzliche Auffbau und die Wirkungsweise der Türdichtung 30 entsprechen dem Ausführungsbeispiel gemäß Figur 1. Die Türdichtung 30 besteht aus einem Dichtungsprofil 31, das widerum aus einer Hohlkammerdichtung 32 und einem Befestigungsbereich 33 besteht. Der Befestigungsbereich 33 dient zur Befestigung der Türdichtung 30 an einem Türflansch 39. Dazu weist der Befestigungsbereich 33 Haltelippen 34 sowie eine Verstärkungseinlage 35 auf. Die Verstärkungseinlage 35 hat wiederum einen im wesentlichen U-förmigen Querschnitt. Die Hohlkammerdichtung 32 weist zwei Hohlkammern 36a, 36b auf, die von dem jeweiligen Dichtungsmaterial eingeschlossen sind. Die Verwendung zweier Hohlkammern hat im vorliegenden Ausführungsbeispiel den Vorteil, daß sich die Dichtung besser an die Kontur einer nicht dargestellten Tür anlegen kann, wenn diese geschlossen wird. In dem Bereich der Hohlkammerdichtung 32, der mit der Tür in Berührung kommt, weist die Hohlkammerdichtung 32 einen Widerstandsbereich 38 auf, der in dem Gummikörper der Hohlkammerdichtung 32 koextrudiert ist und dem ein leitfähiger Stoff zugegeben worden ist. Weiterhin ist die Hohlkammerdichtung im Bereich des Widerstandsbereichs 38 mit einer isolierenden Außenschicht 37 beschichtet. Die isolierende Außenschicht 37 hat wiederum den Zweck, den Benutzer und den empfindlichen Widerstandsbereich 38 zu schützen. Die Betätigung des aus dem elektrischen Widerstandsbereichs 38 aufgebauten Heizmittels erfolgt wiederum über ein nicht dargestelltes Auslöseelement. Um zu vermeiden, daß bei niedrigen Temperaturen die Türdichtung 30 beim Öffnen der nicht dargestellten Tür beschädigt wird, wird zunächst wiederum das elektrische Heizmittel betätigt. Durch den durch den Widerstandsbereich 38 fließenden Strom wird dieser erwärmt, so daß die Türdichtung 30 von der Tür losgetaut wird. Nach erfolgter Loslösung kann die Tür ohne Beschädigung der Türdichtung 30 geöffnet werden.

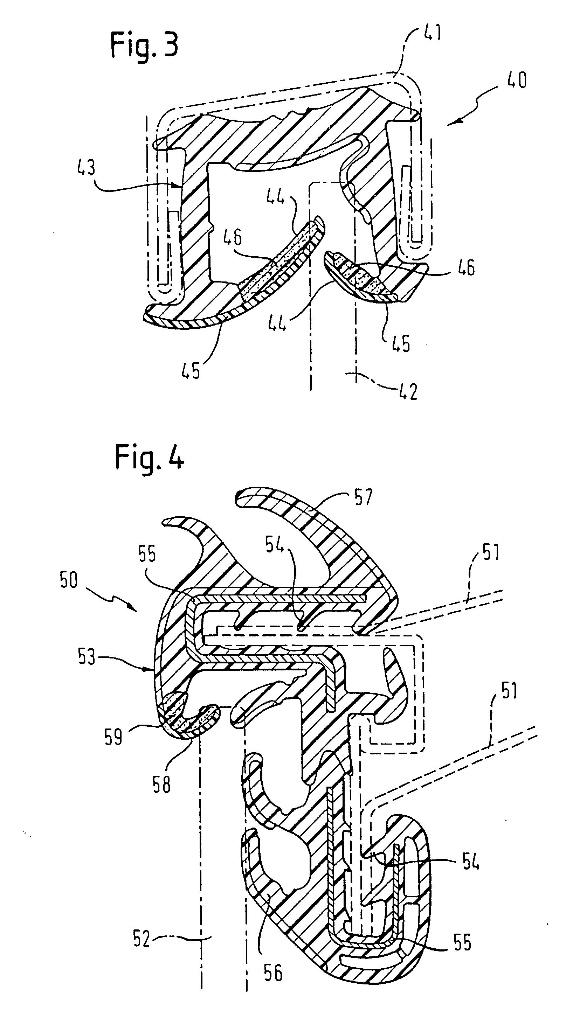

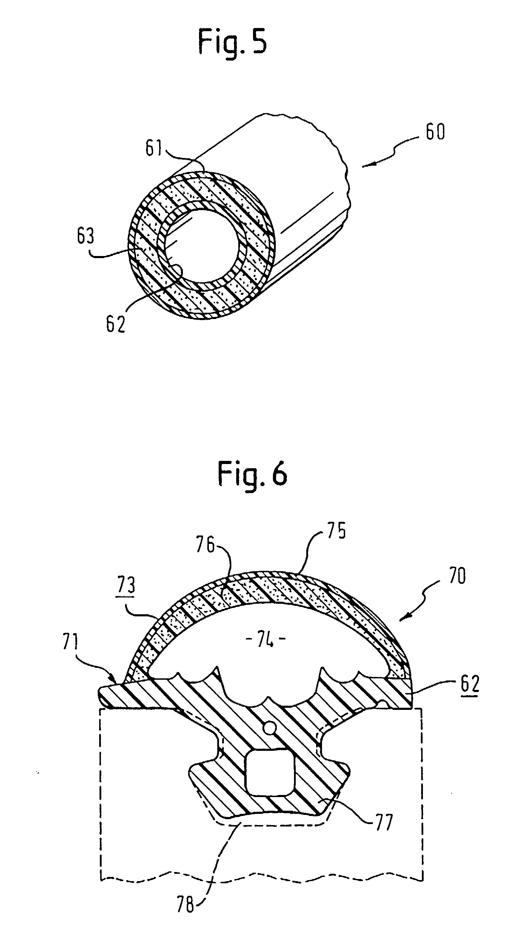

In den Figuren 3 und 4 sind zwei Ausführungsvarianten eines Fensterführungsprofils 40 und 50 dargestelllt. Bei dem Fensterführungsprofil 40 gemäß Figur 3 wird das Fensterführungsprofil 40 von einem Fensterrahmen 41 aufgenommen. Das Fensterführungsprofil 40 besteht aus einem Dichtungsprofil 43, das in seinen freien Enden zwei Dichtlippen 44 aufweist. Dabei ist die Form des Dichtungsprofils 43 und der daran angeordneten Dichtlippen 44 derart gewählt, daß eine Fensterscheibe 42 in einen von dem Dichtungsprofil 43 und den Dichtlippen 44 gebildeten Innenraum eingeführt werden kann. Dazu werden die Dichtlippen 44 beim Einführen der Fensterscheibe 42 in den vom Dichtungsprofil 43 gebildeten Innenraum hineingedrückt. Durch die elastischen Rückstellkräfte in den Dichtlippen 44 tendieren diese dazu, in ihre Ausgangslage zurückzuklappen. Dadurch wird eine vorteilhafte und sichere Abdichtung der Fensterscheibe 42 erreicht. Um zu verhindern, daß bei tiefen Temperaturen, bei denen die Fensterscheibe 42 an dem Fensterführungsprofil 40 anfrieren kann, eine Beschädigung des Fensterführungsprofils 40 durch das Öffnen der angefrorenen Fensterscheibe 42 erfolgt, weisen die Dichtlippen 44 einen Widerstandsbereich 46 auf, der durch Zugabe eines leitfähigen Stoffs als elektrischer Widerstand ausgebildet ist. Der Widerstandsbereich 46 ist wiederum mit einer isolierenden Außenschicht 45 beschichtet. Durch Erwärmung im Widerstandsbereich 46, die auf gleiche Weise wie in den Ausführungsbeispielen gemäß Figuren 1 und 2 erfolgt, kann die Fensterscheibe 42 vor dem Öffnen vom Fensterführungsprofil 40 losgetaut werden. Eine modifizierte Form eines Fensterführungsprofils ist in Figur 4 dargestellt. Das darin beschriebene Fensterführungsprofil 50 besteht aus einem Dichtungsprofil 53, das an Rahmenteilen 51 befestigt ist. Die Befestigung erfolgt in der wie oben beschriebenen Art und Weise mittels Haltelippen 54 und Verstärkungseinlagen 55. Zur Abdichtung gegen einen Türspalt sowie eine Fensterscheibe 52 weist das Fensterführungsprofil 50 Dichtlippen 56 und 57 auf. Weiterhin ist eine zusätzliche Dichtlippe vorgesehen, die aus einem Widerstandsbereich 59 und einer darauf befindlichen isolierenden Außenschicht 58 aufgebaut ist. Im vorliegenden Ausführungsbeispiel ist nur diejenige Dichtlippe, die außerhalb der Fensterscheibe 52 anzuliegen kommt und die mit der äußeren Umgebung in Kontakt steht, als Widerstandsbereich ausgebildet. Dies ergibt sich aus der Tatsache, daß dieser Bereich der einzige Bereich des Fensterführungsprofils 50 ist, der auf Grund niedriger Temperaturen an der Fensterscheibe 52 anfrieren kann. Durch das Ausführungsbeispiel gemäß Figur 5 wird in anschaulicher Weise dargestellt, daß der als elektrisches Heizmittel ausgebildete Bereich des Gummikörpers, der durch Zugabe eines leitfähigen Stoffs als elektrischer Widerstand ausgebildet ist und der mit dem Dichtungsprofil 53 koextrudiert ist, in jeder beliebigen Form und Größe, im vorliegenden Ausführungsbeispiel nur lokal, im Fensterführungsprofil 50 ausgebildet werden kann. Durch die genaue Anordnungsmöglichkeit des aufheizbaren Widerstandsbereichs 59 im Fensterführungsprofil 50 kann gezielt dort Wärme erzeugt werden, wo sie gebraucht wird. Weiterhin wird durch die minimal notwendige Verwendung von leitfähigen Stoffen der Kostenaufwand bei der Herstellung des Fensterführungsprofils 50 reduziert.

In der Figur 5 ist eine weitere Ausführungsvariante des beheizbaren Gummikörpers gemäß der vorliegenden Erfindung beschrieben. In diesem Ausführungsbeispiel hat der beheizbare Gummikörper die Form eines Flüssigkeitsschlauchs 60. Der Flüssigkeitsschlauch 60 besteht aus einem Widerstandsbereich 63 sowie einer isolierenden Außenschicht 61 und einer isolierenden Innenschicht 62. Der Widerstandsbereich 63 besteht aus einer Gummimasse, die durch Zugabe eines leitfähigen Stoffs zu dem gummielastischen Material als elektrischer Widerstand ausgebildet ist. Die isolierende Außenschicht hat den Zweck, einen direkten Kontakt zwischen dem Benutzer und dem einen Strom leitenden Widerstandsbereich zu verhindern. Auf Grund der Tatsache, daß durch derartige Flüssigkeitschläuche oftmals Wasser transportiert wird, weist der Flüssigkeitsschlauch 60 die isolierende Innenschicht 62 auf. Die isolierende Innenschicht 62 hat insbesondere die Aufgabe, den elektrisch leitenden Widerstandsbereich vor Korrosion und ähnlichen Beschädigungen zu schützen.

Die Verwendung des beschriebenen Flüssigkeitsschlauchs 60 hat insbesondere folgenden Zweck. Wird ein solcher Schlauch beispielsweise als Wischwasserschlauch zur Zuführung zu einem Scheibenwischer eines Kraftfahrzeugs verwendet, besteht insbesondere bei niedrigen Temperaturen die Gefahr, daß das in dem Schlauch befindliche Wasser einfriert. Eine Verwendung der Scheibenwischanlage ist somit nicht mehr möglich. Wenn beispielsweise der Widerstandsbereich des Wischwasserschlauchs mit dem als Zentralverriegelung für ein Kraftfahrzeug ausgebildeten Auslöseelement oder mit der Zündung gekoppelt ist, wird bei Betätigung ein elektrischer Strom durch den Widerstandsbereich 63 geleitet. Dazu ist der Widerstandsbereich 63 mit nicht dargestellten Anschlußmitteln an einer geeigneten Spannungsquelle angeschlossen. Auf Grund der leitfähigen Stoffe, die einen elektrischen Widerstand bilden, wird der Widerstandsbereich 63 durch den Stromfluß erwärmt. Die erzeugte Wärme wird auf das im Schlauch befindliche gefrorene Wasser übertragen, so daß dieses aufgetaut werden kann. Die Verwendbarkeit der mit dem Wischwasserschlauch 60 verbundenen Scheibenwischanlage ist somit nach kurzer Zeit wieder hergestellt.

Figur 6 zeigt die Ausbildung eines erfindungsgemäßen beheizbaren Gummikörpers als Schiebedachdichtung 70. Die Schiebedachdichtung 70 besteht wiederum aus einem Dichtungsprofil 71, das aus einem Befestigungsbereich 72 und einer Hohlkammerdichtung 73 gebildet ist. Zu Befestigung der Schiebedachdichtung am Rahmen eines Fahrzeugs weist der Befestigungsbereich 72 einen zapfenförmigen Fuß 77 auf. Der zapfenförmige Fuß 77 kann in eine entsprechend ausgebildete hinterschnittene Nut 78, die sich im Rahmen des Fahrzeugs befindet, eingepaßt werden. Dadurch ist die Schiebedachdichtung 70 fest mit dem Rahmen des Fahrzeugs verbunden. Die Hohlkammerdichtung 73 umgibt eine Hohlkammer 74. Die Funktionsweise der Hohlkammer 74 entspricht der Funktionsweisen der entsprechenden Hohlkammern in den Ausführungsbeispielen gemäß Figur 1 und 2. Da bei der Schiebedachdichtung 70 die gesamte Hohlkammerdichtung 73 mit einem Schiebedach (nicht dargestellt) in Kontakt tritt, ist die gesamte Hohlkammerdichtung als Widerstandsbereich 76 ausgebildet. Aus den vorstehend erwähnten Gründen ist der Widerstandsbereich 76 mit einer isolierenden Außenschicht 75 beschichtet. Die Arbeits- und Funktionsweise der Schiebedachdichtung 70 entspricht denjenigen Funktions- und Arbeitsweisen der vorstehend beschriebenen Ausführungsbeispiele.

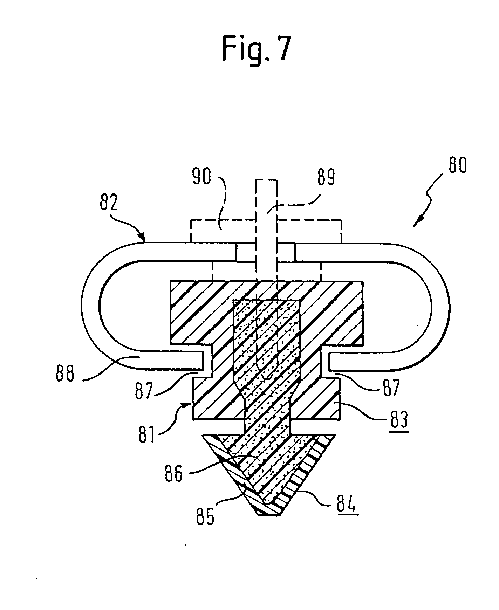

Gemäß Figur 7 wird noch eine weitere Verwendungsmöglichkeit des beheizbaren Gummikörpers beschrieben. In diesem Ausführungsbeispiel bildet der beheizbare Gummikörper den Teil einer Wischerblattanordnung 80. Die Wischerblattanordnung 80 besteht aus dem eigentlichen Wischerblatt 81 sowie einer Aufnahmevorrichtung 82. Das Wischerblatt 81 besteht aus einem Wischerbereich 84 und einem Befestigungsbereich 83. Der Befestigungsbereich 83 hat die Funktion, das Wischerblatt 81 in der Aufnahmevorrichtung 82 zu halten. Dazu weist der Befestigungsbereich 83 Aussparungen 87 auf, die in entsprechende korrespondierende hinterschnittene Nuten 88 der Aufnahmevorrichtung 82 eingreifen. Auf Grund der Tatsache, daß der Befestigungsbereich 83 aus einem elastischen Material hergestellt ist, kann das Wischerblatt 81 aus der Aufnahmevorrichtung 82 herausgezogen werden, wenn dieses ausgewechselt werden soll. Der Wischerbereich 84 ist als Widerstandsbereich 86 ausgebildet, der durch Zugabe eines leitfähigen Stoffs als elektrischer Widerstand ausgebildet ist. Der als Widerstandsbereich 86 ausgebildete Wischerbereich 84 ist mit dem Befestigungsbereich 83 koextrudiert. In demjenigen Bereich des Wischerblatts 81, der äußeren Einflüssen ausgesetzt ist und der mit einem Benutzer in direkten Kontakt kommen kann, ist eine isolierende Außenschicht 85 vorgesehen. Die isolierende Außenschicht 85 übernimmt wieder die wie vorstehenden beschriebenen Schutzfunktionen.

Zur Erwärmung des Widerstandsbereichs 86 ist ein elektrischer Anschluß 89 vorgesehen, der mit einer nicht dargestellten geeigneten Spannungsquelle verbunden ist. Um eine sichere, nicht lösbare Verbindung zwischen dem elektrischen Anschluß 89 und dem Widerstandsbereich 86 herzustellen, hat der elektrische Anschluß die Form einer Nadel, die in den Widerstandsbereich 86 des Wischerblatts 81 eingesteckt wird. Aus diesem Grund ist ein Teilbereich des Widerstandsbereichs 86 im Befestigungsbereich 83 eingebettet. Die Festlegung des elektrischen Anschlusses 89 an der Aufnahmevorrichtung 82 erfolgt über Befestigungsmittel 90. Auf diese Weise wird zwischen dem elektrischen Anschluß 89 und dem Widerstandsbereich 86 des Wischerblatts 81 eine Steckverbindung geschaffen, die auf einfache Weise gelöst werden kann. Dies ist insbesondere dann von Bedeutung, wenn das Wischerblatt nach Abnutzung ausgetauscht werden kann. Der Austausch erfolgt derart, daß das Wischerblatt 81 aus der Aufnahmevorrichtung 82 herausgezogen wird. Dadurch wird gleichzeitig der nadelförmige elektrische Anschluß 89 aus dem Widerstandsbereich 86 herausgezogen. Das Aufstecken eines neuen Wischerblatts erfolgt in umgekehrter Reihenfolge, d.h. der nadelförmige elektrische Anschluß 89 wird in den Widerstandsbereich 86 eingesteckt und der Befestigungsbereich 83 in die Aufnahmevorrichtung 82 eingeklemmt. Zur besseren Führung des elektrischen Anschlusses 89 in den Widerstandsbereich 86 können im Befestigungsbereich 83 zusätzliche Führungskanäle vorgesehen sein.

In allen vorbeschriebenen Ausführungsbeispielen wird jeweils ein beheizbarer Gummikörper beschrieben, der auf einfache Weise durch Koextrudieren eines als elektrischer Widerstand ausgebildeten Bereichs zu einem Gummikörper hergestellt werden kann. Durch die Möglichkeit, den elektrischen Widerstand durch Zugabe von leitfähigen Stoffen zu realisieren, kann auf separate Widerstandselemente wie Widerstandsdrähte und dergleichen verzichtet werden. Dadurch können Beinträchtigungen in der Funktionsweise des beheizbaren Gummikörpers vermieden werden.

## Patentansprüche

1. Beheizbarer Gummikörper, insbesondere Dichtungsprofil oder Gummischlauch, wobei der Gummikörper (10; 30; 40; 50; 60; 70; 81) aus einem gummielastischen Material extrudiert ist und ein elektrisches Heizmittel aufweist, das mit einer geeigneten Spannungsquelle verbindbar ist, dadurch gekennzeichnet, daß das elektrische Heizmittel mindestens einen in dem Gummikörper (10; 30; 40; 50; 60; 70; 81) koextrudierten Widerstandsbereich (19; 38; 46; 59; 63; 76; 86) aufweist, der durch Zugabe eines leitfähigen Stoffs zu dem gummielastischen Material als elektrischer Widerstand ausgebildet ist.

2. Beheizbarer Gummikörper nach Anspruch 1, dadurch gekennzeichnet, daß der Widerstandsbereich (19; 38; 46; 59; 76; 86) an der Oberfläche des Gummikörpers (10; 30; 40; 50; 60; 70; 81) ausgebildet ist.

3. Beheizbarer Gummikörper nach Anspruch 1, dadurch gekennzeichnet, daß der leitfähige Stoff ein Metall und/oder Graphit und/oder Ruß und/oder ein koextrudierter leitfähiger Kunststoff ist.

4. Beheizbarer Gummikörper nach einem der vorhergehenden Ansprüche, dadurch gekennzeichnet, daß der Gummikörper (10; 30; 40; 60; 70; 81) aus EPDM gebildet ist.

5. Beheizbarer Gummikörper nach einem der vorhergehenden Ansprüche, dadurch gekennzeichnet, daß der Widerstandsbereich (19; 38; 46; 59; 76; 86) des Gummikörpers mit mindestens einer Isolierschicht (18; 37; 54; 58; 61, 62; 75; 85) beschichtet ist.

6. Beheizbarer Gummikörper nach Anspruch 5, dadurch gekennzeichnet, daß die Isolierschicht ein nicht leitender Lack und/oder Kunststoff ist.

7. Beheizbarer Gummikörper nach einem der vorhergehenden Ansprüche, dadurch gekennzeichnet, daß das Heizmittel zu seiner Betätigung mit einem Auslöseelement gekoppelt ist.

8. Beheizbarer Gummikörper nach Anspruch 7, dadurch gekennzeichnet, daß das Auslöseelement ein Zeitgeber und/oder ein Außentemperaturgeber und/oder ein Betätigungsschalter und/ oder die Zentralverriegerlung für ein Kraftfahrzeug und/oder die Zündung eines Kraftfahrzeugs ist.

9. Beheizbarer Gummikörper nach einem der vorhergehenden Ansprüche, dadurch gekennzeichnet, daß der beheizbare Gummikörper eine Deckeldichtung (10) vorzugsweise eine Heckdeckel- und/oder Frontdeckeldichtung für ein Kraftfahrzeug ist.

10. Beheizbarer Gummikörper nach einem der Ansprüche 1 bis 8, dadurch gekennzeichnet, daß der beheizbare Gummikörper eine Schiebedachdichtung (70) ist.

11. Beheizbarer Gummikörper nach einem der Ansprüche 1 bis 8, dadurch gekennzeichnet, daß der beheizbare Gummikörper eine Türdichtung (30) und/oder eine Türummantelung ist.

12. Beheizbarer Gummikörper nach einem der Ansprüche 1 bis 8 dadurch gekennzeichnet, daß der beheizbare Gummikörper ein Fensterführungsprofil (40; 50) ist.

13. Beheizbarer Gummikörper nach einem der Ansprüche 1 bis 8, dadurch gekennzeichnet, daß der beheizbare Gummikörper ein Flüssigkeitsschlauch (60), vorzugsweise ein Wasserschlauch ist.

14. Beheizbarer Gummikörper nach einem der Ansprüche 1 bis 8, dadurch gekennzeichnet, daß der beheizbare Gummikörper ein Wischerblatt (81) ist.

## Claims

1. A heatable rubber body, more particularly a sealing profile or a rubber hose, the rubber body (10; 30; 40; 50; 60; 70; 81) being extruded from an elastomeric material and comprising an electrical heating means connectable to a suitable voltage source, characterized in that the electrical heating means comprises at least one resistor portion (19; 38; 46; 59; 63; 76; 86) coextruded in the rubber body (10; 30; 40; 50; 60; 70; 81), said resistor portion being configured as an electrical resistor by the admixture of a conductive substance to the elastomeric material.

2. The heatable rubber body as set forth in claim 1, characterized in that the resistor portion (19; 38; 46; 59; 63; 76; 86) is configured on the surface of the rubber body (10; 30; 40; 50; 60; 70; 81).

3. The heatable rubber body as set forth in claim 1, characterized in that the conductive substance is a metal and/or graphite and/or carbon black and/or a coextruded conductive plastics material.

4. The heatable rubber body as set forth in any of the preceding claims, characterized in that the rubber body (10; 30; 40; 50; 60; 70; 81) is formed of EPDM.

5. The heatable rubber body as set forth in any of the preceding claims, characterized in that the resistor portion (19; 38; 46; 59; 63; 76; 86) of the rubber body is coated by at least one insulating coating (18; 37; 54; 58; 61, 62; 75; 85).

6. The heatable rubber body as set forth in claim 5, characterized in that the insulating coating is a non-conductive lacquer and/or plastics material.

7. The heatable rubber body as set forth in any of the preceding claims, characterized in that the heating means is coupled to an activating element for its actuation.

8. The heatable rubber body as set forth in claim 7, characterized in that the activating element is a timer and/or an ambient temperature sensor and/or an actuating switch and/or motor vehicle central locking system and/or motor vehicle ignition system.

9. The heatable rubber body as set forth in any of the preceding claims, characterized in that the heatable rubber body is a lid weatherseal (10), preferably a motor vehicle trunk lid and/or hood lid weatherseal.

10. The heatable rubber body as set forth in any of the claims 1 to 8, characterized in that the heatable rubber body is a sunroof weatherseal (70).

11. The heatable rubber body as set forth in any of the claims 1 to 8, characterized in that the heatable rubber body is a door weatherseal (30) and/or a door surround.

12. The heatable rubber body as set forth in any of the claims 1 to 8, characterized in that the heatable rubber body is a window guide profile (40; 50).

13. The heatable rubber body as set forth in any of the claims 1 to 8, characterized in that the heatable rubber body is a fluid hose (60), preferably a water hose.

14. The heatable rubber body as set forth in any of the claims 1 to 8, characterized in that the heatable rubber body is a wiper blade (81).

## Revendications

1. Corps en caoutchouc susceptible d'être chauffé, en particulier profilé d'étanchéité ou tube en caoutchouc, dans lequel le corps en caoutchouc (10 ; 30 ; 40 ; 50 ; 60 ; 70 ; 81) est extrudé à partir d'un matériau présentant l'élasticité du caoutchouc et comporte un organe de chauffage électrique, susceptible d'être relié à une source de tension appropriée, caractérisé en ce l'organe de chauffage électrique comprend au moins une zone résistive (19 ; 38 ; 46 ; 59 ; 63 ; 76 ; 86) coextrudée avec le corps en caoutchouc (10 ; 30 ; 40 ; 50 ; 60 ; 70 ; 81), ladite zone étant réalisée sous forme de résistance électrique par addition d'un matériau conducteur dans le matériau présentant l'élasticité du caoutchouc.

2. Corps en caoutchouc susceptible d'être chauffé selon la revendication 1, caractérisé en ce que la zone résistive (19 ; 38 ; 46 ; 59 ; 76 ; 86) est réalisée à la surface du corps en caoutchouc (10 ; 30 ; 40 ; 50 ; 60 ; 70 ; 81).

3. Corps en caoutchouc susceptible d'être chauffé selon la revendication 1, caractérisé en ce que le matériau conducteur est un métal et/ou du graphite et/ou du noir de carbone et/ou une matière plastique conductrice coextrudée.

4. Corps en caoutchouc susceptible d'être chauffé selon l'une des revendications précédentes, caractérisé en ce que le corps en caoutchouc (10 ; 30 ; 40 ; 60 ; 70 ; 81) est formé en EPDM.

5. Corps en caoutchouc susceptible d'être chauffé selon l'une des revendications précédentes, caractérisé en ce que la zone résistive (19 ; 38 ; 46 ; 59 ; 76 ; 86) du corps en caoutchouc est revêtue d'au moins une couche isolante (18 ; 37 ; 54 ; 58 ; 61, 62 ; 75 ; 85).

6. Corps en caoutchouc susceptible d'être chauffé selon la revendication 5, caractérisé en ce que la couche isolante est une peinture non-conductrice et/ou de la matière plastique non-conductrice.

7. Corps en caoutchouc susceptible d'être chauffé selon l'une des revendications précédentes, caractérisé en ce que l'organe de chauffe est accouplé à un élément de déclenchement pour son actionnement.

8. Corps en caoutchouc susceptible d'être chauffé selon la revendication 7, caractérisé en ce que l'élément de déclenchement est un circuit de temporisation et/ou un détecteur de température extérieure et/ou un commutateur d'actionnement et/ou le système de verrouillage centralisé pour un véhicule automobile et/ou l'allumage d'un véhicule automobile.

9. Corps en caoutchouc susceptible d'être chauffé selon l'une des revendications précédentes, caractérisé en ce que le corps en caoutchouc susceptible d'être chauffé est un joint couvrant (10), de préférence un joint couvrant de hayon et/ou un joint couvrant de capot avant pour un véhicule automobile.

10. Corps en caoutchouc susceptible d'être chauffé selon l'une des revendications 1 à 8, caractérisé en ce que le corps en caoutchouc susceptible d'être chauffé est un joint de toit ouvrant (70).

11. Corps en caoutchouc susceptible d'être chauffé selon l'une des revendications 1 à 8, caractérisé en ce que le corps en caoutchouc susceptible d'être chauffé est un joint de porte (30) et/ou un entourage de porte.

12. Corps en caoutchouc susceptible d'être chauffé selon l'une des revendications 1 à 8, caractérisé en ce que le corps en caoutchouc susceptible d'être chauffé est un profilé de guidage de fenêtre (40 ; 50).

13. Corps en caoutchouc susceptible d'être chauffé selon l'une des revendications 1 à 8, caractérisé en ce que le corps en caoutchouc susceptible d'être chauffé est un tube à liquide (60), de préférence un tube à eau.

14. Corps en caoutchouc susceptible d'être chauffé selon l'une des revendications 1 à 8, caractérisé en ce que le corps en caoutchouc susceptible d'être chauffé est une lame d'essuie-glace (81).
